(19) **Europäisches Patentamt**

**European Patent Office**

**Office européen des brevets**

(11) **EP 1 315 419 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(21) Anmeldenummer: **01951516.2**

(22) Anmeldetag: **23.05.2001**

(51) Int Cl.:
***A01N 43/80*** (2006.01)

(86) Internationale Anmeldenummer:
**PCT/EP2001/005939**

(87) Internationale Veröffentlichungsnummer:
**WO 2002/017716 (07.03.2002 Gazette 2002/10)**

(54) **SYNERGISTISCHE BIOZIDZUSAMMENSETZUNG MIT 2-METHYLISOTHIAZOLIN-3-ON**

SYNERGETIC BIOCIDAL COMPOSITION COMPRISING 2-METHYLISOTHIAZOLINE-3-ON

COMPOSITION BIOCIDE SYNERGIQUE CONTENANT DE LA 2-METHYLISOTHIAZOLINE-3-ONE

(84) Benannte Vertragsstaaten:
**AT BE CH CY DE DK ES FI FR GB GR IE IT LI LU MC NL PT SE TR**

(30) Priorität: **31.08.2000 DE 10042894**

(43) Veröffentlichungstag der Anmeldung:
**04.06.2003 Patentblatt 2003/23**

(60) Teilanmeldung:
**06007823.5 / 1 676 479**

(73) Patentinhaber: **THOR GmbH**
**67346 Speyer (DE)**

(72) Erfinder:
• **ANTONI-ZIMMERMANN, Dagmar**
**67346 Speyer (DE)**
• **BAUM, Rüdiger**
**68753 Waghäusel (DE)**
• **SCHMIDT, Hans-Jürgen**
**67346 Speyer (DE)**
• **WUNDER, Thomas**
**67435 Neustadt/Weinstrasse (DE)**

(74) Vertreter: **Diehl & Partner**
**Patentanwälte**
**Augustenstrasse 46**
**80333 München (DE)**

(56) Entgegenhaltungen:
| | |
|---|---|
| **EP-A- 0 398 795** | **EP-A- 0 513 637** |
| **EP-A- 0 694 258** | **WO-A-00/28823** |
| **WO-A-01/62081** | **WO-A-96/01562** |
| **WO-A-99/08530** | **US-A- 4 732 905** |
| **US-A- 5 464 850** | **US-A- 6 114 366** |

• **DATABASE WPI Section Ch, Week 200107 Derwent Publications Ltd., London, GB; Class D22, AN 2001-061027 XP002178206 & WO 00 67578 A (SOMAR CORP), 16. November 2000 (2000-11-16)**
• **DATABASE WPI Section Ch, Week 199921 Derwent Publications Ltd., London, GB; Class C02, AN 1999-248389 XP002178207 & JP 11 071210 A (SANAI SEKIYU KK), 16. März 1999 (1999-03-16)**

**Beschreibung**

Die Erfindung betrifft eine Biozidzusammehsetzung als Zusatz zu Stoffen, die von schädlichen Mikroorganismen befallen werden können, mit einem Gehalt an 2-Methylisothiazolin-3-on (MIT) als biozidem Wirkstoff und mindestens einem weiteren bioziden Wirkstoff.

Biozide Mittel werden in vielen Bereichen eingesetzt, beispielsweise zur Bekämpfung von schädlichen Bakterien, Pilzen oder Algen. Es ist seit langem bekannt, in solchen Zusammensetzungen 4-Isothiazolin-3-one (die auch als 3-Isothiazolone bezeichnet werden) einzusetzen, da sich unter diesen sehr wirksame biozide Verbindungen befinden.

Eine dieser Verbindungen ist 5-Chlor-2-methylisothiazolin-3-on. Sie weist zwar eine gute biozide Wirkung auf, hat aber bei ihrer praktischen Handhabung verschiedene Nachteile. Beispielsweise löst die Verbindung bei Personen, die damit umgehen, häufig Allergien aus. Auch bestehen in manchen Ländern gesetzliche Beschränkungen für den AOX-Wert von Industrieabwässern, d. h. es darf im Wasser eine bestimmte Konzentration von an Aktivkohle adsorbierbaren organischen Chlor-, Brom- und Iodverbindungen nicht überschritten werden. Dies verhindert dann den Einsatz von 5-Chlor-2-methylisothiazolin-3-on im gewünschten Umfang. Ferner ist die Stabilität dieser Verbindung unter bestimmten Bedingungen, z.B. bei hohen pH-Werten oder in Anwesenheit von Nucleophilen oder Reduktionsmitteln, nicht ausreichend.

Ein weiteres bekanntes Isothiazolin-3-on mit biozider Wirkung ist 2-Methylisothiazolin-3-on. Die Verbindung vermeidet zwar verschiedene Nachteile von 5-Chlor-2-methylisothiazolin-3-on, beispielsweise das hohe Allergierisiko, hat aber eine wesentlich geringere biozide Wirkung. Ein einfacher Austausch von 5-Chlor-2-methylisothiazolin-3-on durch 2-Methylisothiazolin-3-on ist daher nicht möglich.

Es ist auch schon bekannt, Kombinationen aus verschiedenen Isothiazolin-3-onen oder Kombinationen aus mindestens einem Isothiazolin-3-on und anderen Verbindungen zu benutzen. Beispielsweise ist in der EP 0676140 A1 eine synergistische biozide Zusammensetzung beschrieben, die 2-Methyl-isothiazolin-3-on (2-Methyl-3-isothiazolon) und 2-n-Octyl-isothiazolin-3-on (2-n-Octyl-3-isothiazolon) enthält.

Aus der US 5328926 sind synergistische Biozidzusammensetzungen bekannt, die Kombinationen aus 1,2-Benz-isothiazolin-3-on (BIT) und einer Iodpropargylverbindung (Iodpropinylverbindung) sind. Als eine solche Verbindung ist beispielsweise 3-Iodpropargyl-N-butylcarbamat genannt.

US 5,464,850 offenbart synergistische Zusammensetzungen für die Konservierung von chemischen Reagenzien in klinischen Labors, enthaltend eine Kombination aus 5-Chlor-2-methyl-isothiazolin-3-on, 2-Methylisothiazolin-3-on und einen Formaldehyd-Depotstoff, insbesondere 1,3-Bis(hydroxymethyl)5,5-dimethyl-2,4-imidazolidindion.

JP 11071210 A offenbart antiseptische Mittel für industrielle Zwecke, enthaltend eine Kombination aus einem Isothiazolinon, insbesondere 1,2-Benzisothiazolin-3-on oder die 5-Chlor-2-methylisothiazolin-3-on/2-Methylisothiazolin-3-on-Mischung, mit entweder N-Bis(3-aminopropyl)dodecylamin oder mit Polyhexamethylenbiguanid und dem Formaldehyd-Depotstoff Dimethyloldimethylhydantoin.

Der Erfindung liegt die Aufgabe zugrunde, eine Biozidzusammensetzung anzugeben, die weitgehend frei von 5-Chlor-2-methylisothiazolin-3-on ist, das heißt, worin das Gewichtsverhältnis von MIT zu 5-Chlor-2-methylisothiazolin-3-on mindestens 100:1 beträgt. Außerdem sollen die Komponenten der Biozidzusammensetzung synergistisch zusammenwirken, so daß sie bei ihrem gleichzeitigen Einsatz in geringeren Konzentrationen verwendet werden können als bei ihrer Einzelverwendung. So sollen der Mensch und die Umwelt weniger belastet sowie die Kosten der Bekämpfung schädlicher Mikroorganismen gesenkt werden.

Diese Aufgabe löst die Erfindung durch eine Biozidzusammensetzung der eingangs genannten Art, die dadurch gekennzeichnet ist, daß sie als weiteren bioziden Wirkstoff Formaldehyd (HCHO) oder einen Formaldehyd-Depotstoff enthält.

Diese weiteren bioziden Wirkstoffe können einzeln oder zusammen neben dem MIT in der Biozidzusammensetzung vorliegen.

Ferner kann die erfindungsgemäße Biozidzusammensetzung neben der Kombination aus einerseits MIT und andererseits Formaldehyd oder Formaldehyd-Depotstoff oder Formaldehyd + Formaldehyd-Depotstoff noch einen oder mindestens zwei der bioziden Wirkstoffe 2-Brom-2-nitro-1,3-propandiol (Bronopol, BNP), Polyhexamethylenbiguanid (PMG), o-Phenylphenol (OPP), ein Pyrithion, vorzugsweise Zinkpyrithion (ZnPy), Natriumpyrithion (NaPy), Kupferpyrithion (CuPy) und Eisenpyrithion (FePy), N-Butyl-1,2-benzisothiazolin-3-on (BBIT), N-Hydroxymethyl-1,2-benzisothiazolin-3-on (HMBIT) und ein Benzalkoniumchlorid, vorzugsweise Dimethylbenzalkoniumchlorid (BAC), enthalten.

Die erfindungsgemäße Biozidzusammensetzung zeichnet sich unter anderem dadurch aus, daß die Kombination aus MIT und einem der vorgenannten weiteren bioziden Wirkstoffe synergistisch wirkt und deshalb mit einer geringeren Gesamtkonzentration der bioziden Komponenten einsetzbar ist.

Ferner hat die Biozidzusammensetzung der Erfindung den Vorteil, daß sie bisher in der Praxis benutzte, aber mit Nachteilen bezüglich Gesundheit und Umwelt behaftete Wirkstoffe, z. B. das 5-Chlor-2-methylisothiazolin-3-on, ersetzen kann. Außerdem kann die erfindungsgemäße Biozidzusammensetzung bei Bedarf nur mit Wasser als günstigem Medium hergestellt werden. Auch ermöglicht es die Erfindung, durch den Zusatz weiterer Wirkstoffe, die Zusammensetzung speziellen Zielen anzupassen, beispielsweise im Sinne einer erhöhten bioziden Wirkung, eines verbesserten Langzeitschutzes der von Mikroorganismen befallenen Stoffe, einer verbesserten Verträglichkeit mit den zu schützenden Stoffen oder eines verbesserten toxikologischen oder ökotoxikologischen Verhaltens.

Die erfindungsgemäße Biozidzusammensetzung enthält das MIT und den vorgenannten weiteren bioziden Wirkstoff normalerweise im Gewichtsverhältnis von 1:100 bis 100:1, vorzugsweise im Gewichtsverhältnis von 1:20 bis 10:1.

In der Biodzidzusammensetzung liegen das MIT und der vorgenannte weitere biozide Wirkstoff in einer Gesamtkonzentration von vorzugsweise 0,1 bis 100 Gew.%, insbesondere von 1 bis 50 Gew.%, ganz besonders bevorzugt von 1 bis 20 Gew.%, jeweils bezogen auf die gesamte Biozidzusammensetzung, vor.

Es ist zweckmäßig, die Biozide der erfindungsgemäßen Zusammensetzung in Kombination mit einem polaren oder unpolaren flüssigen Medium einzusetzen. Dabei kann dieses Medium beispielsweise in der Biozidzusammensetzung und/oder in dem zu konservierenden Stoff vorgegeben sein.

Bevorzugte polare flüssige Medien sind Wasser, ein Alkohol, wie ein aliphatischer Alkohol mit 1 bis 4 Kohlenstoffatomen, z.B. Ethanol und Isopropanol, ein Ester, ein Glykol, z.B. Ethylenglykol, Diethylenglykol, 1,2-Propylenglykol, Dipropylenglykol und Tripropylenglykol, ein Glykolether, z.B. Butylglykol und Butyldiglykol, ein Glykolester, z.B. Butyldiglykolacetat oder 2,2,4-Trimethylpentandiolmonoisobutyrat, ein Polyethylenglykol, ein Polypropylenglykol, N,N-Dimethylformamid oder ein Gemisch aus solchen Stoffen.

Als unpolare flüssige Medien dienen z. B. Aromaten, vorzugsweise Xylol, Toluol und Alkylbenzole, sowie Paraffine, unpolare Ester, wie Phthalate und Fettsäureester, epoxidierte Fettsäuren und deren Derivate sowie Siliconöle.

Die erfindungsgemäße Biozidzusammensetzung kann auch gleichzeitig mit einem polaren und einem unpolaren flüssigen Medium kombiniert werden.

Die erfindungsgemäße Biozidzusammensetzung kann neben MIT und den vorgenannten weiteren bioziden Wirkstoffen noch einen oder mehrere zusätzliche biozide Wirkstoffe enthalten, die in Abhängigkeit vom Anwendungsgebiet ausgewählt werden. Spezielle Beispiele für solche zusätzlichen bioziden Wirkstoffe sind nachfolgend angegeben.

Benzylalkohol
2,4-Dichlorbenzylalkohol
2-Phenoxyethanol
2-Phenoxyethanolhemiformal
Phenylethylalkohol
5-Brom-5-nitro-1,3-dioxan
Dimethyloldimethylhydantoin
Glyoxal
Glutardialdehyd
Sorbinsäure
Benzoesäure
Salicylsäure
p-Hydroxybenzoesäureester
Chloracetamid
N-Methylolchloracetamid
Phenole, wie p-Chlor-m-kresol
N-Methylolharnstoff,
N,N'-Dimethylolharnstoff
Benzylformal
4,4-Dimethyl-1,3-oxazolidin
1,3,5-Hexahydrotriazinderivate
Quartäre Ammoniumverbindungen, wie
N-Alkyl-N,N-dimethylbenzylammoniumchlorid und
Di-n-decyldimethylammoniumchlord
Cetylpyridiniumchlorid
Diguanidin
Chlorhexidin
1,2-Dibrom-2,4-dicyanobutan
3,5-Dichlor-4-hydroxybenzaldehyd
Ethylenglykolhemiformal
Tetra-(hydroxymethyl)-phosphoniumsalze
Dichlorophen
2,2-Dibrom-3-nitrilopropionsäureamid
3-Iod-2-propinyl-N-butylcarbamat

Methyl-N-benzimidazol-2-ylcarbamat
2-n-Octylisothiazolin-3-on
4,5-Dichlor-2-n-octylisothiazolin-3-on
4,5-Trimethylen-2-methylisothiazolin-3-on
2,2'-Dithiodibenzoesäuredi-N-methylamid
2-Thiocyanomethylthiobenzthiazol
C-Formale, wie
2-Hydroxymethyl-2-nitro-1,3-propandiol
Methylenbisthiocyanat
Umsetzungsprodukte von Allantoin mit Formaldehyd

Die erfindungsgemäße Biozidzusammensetzung kann daneben noch andere übliche Bestandteile enthalten, die dem Fachmann auf dem Gebiet der Biozide als Zusatzstoffe bekannt sind. Es sind dies z.B. Verdickungsmittel, Entschäumer, Stoffe zur Einstellung und Stabilisierung des pH-Werts, Duftstoffe, Dispergierhilfsmittel, färbende Stoffe sowie Stabilisatoren gegen Verfärbungen, z. B. Komplexbildner, und gegen Wirkstoffabbau.

Das MIT ist eine bekannte Verbindung und kann beispielsweise gemäß der US 5466818 hergestellt werden. Das dabei erhaltene Reaktionsprodukt läßt sich z.B. durch Säulenchromatographie reinigen.

HCHO ist bekanntlich im Handel ohne weiteres erhältlich.

Die erfindungsgemäße Biozidzusammensetzung kann auf sehr unterschiedlichen Gebieten eingesetzt werden. Sie eignet sich beispielsweise für den Einsatz in Anstrichmitteln, Putzen, Ligninsulfonaten, Kreideaufschlämmungen, Klebstoffen, Photochemikalien, caseinhaltigen Produkten, stärkehaltigen Produkten, Bitumenemulsionen; Tensidlösungen, Kraftstoffen, Reinigungsmitteln, kosmetischen Produkten, Wasserkreisläufen, Polymerdispersionen und Kühlschmierstoffen gegen den Befall durch beispielsweise Bakterien, filamentöse Pilze, Hefen und Algen.

In diesen zu konservierenden Stoffen werden die Biozide im allgemeinen in einer Gesamtkonzentration im Bereich von 1 bis 100.000 ppm, vorzugsweise von 10 bis 10.000 ppm, bezogen auf den gesamten zu konservierenden Stoff, eingesetzt.

Bei der praktischen Anwendung kann die Biozidzusammensetzung entweder als fertiges Gemisch oder durch getrennte Zugabe der Biozide und der gegebenenfalls übrigen Komponenten der Zusammensetzung in den zu konservierenden Stoff eingebracht werden.

Die Beispiele erläutern die Erfindung.

Beispiel

Mit diesem Beispiel wird der Synergismus von Kombinationen aus MIT und HCHO in der erfindungsgemäßen Biozidzusammensetzung aufgezeigt.

Dazu wurden wäßrige Gemische mit unterschiedlichen Konzentrationen an MIT und HCHO hergestellt, und es wurde die Wirkung dieser Gemische auf Pseudomonas aeruginosa geprüft.

Die wäßrigen Gemische enthielten außer der Biozidkomponente und Wasser noch ein Nährmedium, nämlich eine handelsübliche Müller-Hinton-Bouillon. Die Zelldichte betrug $10^6$ Keime/ml. Die Inkubationszeit war.96 h bei 25 °C. Jede Probe wurde mit 120 U/min auf einem Inkubationsschüttler bebrütet.

In der nachfolgenden Tabelle I sind die verwendeten Konzentrationen von MIT und HCHO angegeben. Ferner ist daraus ersichtlich, ob jeweils ein Wachstum des Mikroorganismus stattfand (Symbol "+") oder nicht (Symbol "-").

Die Tabelle I zeigt somit auch die minimalen Hemmkonzentrationen (MHK). Hiernach ergibt sich beim Einsatz von MIT allein ein MHK-Wert von 60 ppm und beim Einsatz von HCHO allein ein MHK-Wert von 100 ppm. Dagegen sind die MHK-Werte von Gemischen aus MIT und HCHO deutlich niedriger, das heißt, MIT und HCHO wirken in ihrer Kombination synergistisch.

Tabelle I

MHK-Werte von MIT + HCHO bezüglich Pseudomonas aeruginosa bei einer Inkubationszeit von 96 h/25 °C

| Konzentration MIT (ppm) | Konzentration HCHO (ppm) | | | | | | | | |
|---|---|---|---|---|---|---|---|---|---|
| | 250 | 200 | 150 | 125 | 100 | 75 | 50 | 25 | 0 |
| 100 | - | - | - | - | - | - | - | - | - |
| 80 | - | - | - | - | - | - | - | - | - |
| 60 | - | - | - | - | - | - | - | - | - |
| 40 | - | - | - | - | - | - | - | - | + |
| 30 | - | - | - | - | - | - | - | - | + |
| 20 | - | - | - | - | - | - | - | + | + |

(fortgesetzt)

MHK-Werte von MIT + HCHO bezüglich Pseudomonas aeruginosa bei einer Inkubationszeit von 96 h/25 °C

| Konzentration MIT (ppm) | Konzentration HCHO (ppm) | | | | | | | | |
|---|---|---|---|---|---|---|---|---|---|
| | 250 | 200 | 150 | 125 | 100 | 75 | 50 | 25 | 0 |
| 15 | - | - | - | - | - | - | - | + | + |
| 10 | - | - | - | - | - | - | - | + | + |
| 0 | - | - | - | - | - | + | + | + | + |

Der auftretende Synergismus wird mittels der in der Tabelle II berechneten Werte des Synergieindex zahlenmäßig dargestellt. Die Berechnung des Synergieindex erfolgt nach der Methode von F. C. Kull et al., Applied Microbiology, Bd. 9 (1961), S. 538. Hier wird der Synergieindex mit der folgenden. Formel berechnet:

$$\text{Synergieindex SI} = Q_a/Q_A + Q_b/Q_B.$$

Bei der Anwendung dieser Formel auf das hier geprüfte Biozidsystem haben die Größen in der Formel folgende Bedeutung:

$Q_a$ = Konzentration von MIT Biozidgemisch aus MIT und HCHO

$Q_A$ = Konzentration von MIT als einziges Biozid

$Q_b$ = Konzentration von HCHO im Biozidgemisch aus MIT und HCHO

$Q_B$ = Konzentration von HCHO als einziges Biozid

Wenn der Synergieindex einen Wert von über 1 aufweist, bedeutet dies, daß ein Antagonismus vorliegt. Wenn der Synergieindex den Wert 1 annimmt, bedeutet dies, daß eine Addition der Wirkung der beiden Biozide gegeben ist. Wenn der Synergieindex einen Wert von unter 1 annimmt, bedeutet dies, daß ein Synergismus der beiden Biozide besteht.

Tabelle II

Berechnung des Synergieindex von MIT + HCHO bezüglich Pseudomonas aeruginosa bei einer Inkubationszeit von 96 h/25 °C

| MHK bei | | Gesamtkonzentration MIT + HCHO $Q_a + Q_b$ (ppm) | Konzentration | | $Q_a/Q_A$ | $Q_b/Q_B$ | Synergie-index |
|---|---|---|---|---|---|---|---|
| MIT-Konzentration $Q_a$ (ppm) | HCHO-Konzentration $Q_b$ ppm) | | MIT (Gew-%) | HCHO (Gew. %) | | | $Q_a/Q_A + Q_b/Q_B$ |
| 0 | 100 | 100 | 0,0 | 100,0 | 0,00 | 1,00 | 1,00 |
| 10 | 75 | 85 | 11,8 | 88,2 | 0,17 | 0,75 | 0,92 |
| 10 | 50 | 60 | 16,7 | 83,3 | 0,17 | 0,50 | 0,67 |
| 15 | 50 | 65 | 23,1 | 76,9 | 0,25 | 0,50 | 0,75 |
| 20 | 50 | 70 | 28,6 | 71,4 | 0,33 | 0,50 | 0,83 |
| 30 | 25 | 55 | 54,5 | 45,5 | 0,50 | 0,25 | 0,75 |
| 40 | 25 | 65 | 61,5 | 38,5 | 0,67 | 0,25 | 0,92 |
| 60 | 0 | 60 | 100,0 | 0,0 | 1,00 | 0,00 | 1,00 |

Aus der Tabelle II ist ersichtlich, daß der optimale Synergismus, das heißt der niedrigste Synergieindex (0,67) eines MIT/HCHO-Gemisches, bei einem Gemisch aus 16,7 Gew.% MIT und 83,3 Gew.% HCHO liegt.

**Patentansprüche**

1. Biozidzusammensetzung als Zusatz zu Stoffen, die von schädlichen Mikroorganismen befallen werden können, mit einem Gehalt an 2-Methylisothiazolin-3-on als biozidem Wirkstoff und mindestens einem weiteren bioziden Wirkstoff, **dadurch gekennzeichnet, dass** die Biozidzusammensetzung als den weiteren bioziden Wirkstoff Formaldehyd oder einen Formaldehyd-Depotstoff enthält und weit- gehend frei von 5-Chlor-2-methyl-4-isothiazolin-3-on ist, wobei das Gewichtsverhältnis von 2-Methylisothiazolin-3-on zu 5-Chlor-2-methyl-4-isothiazolin-3-on mindestens 100:1 beträgt.

2. Biozidzusammensetzung nach Anspruch 1, **dadurch gekennzeichnet, dass** sie das 2-Methylisothiazolin-3-on und den Formaldehyd oder den Formaldehyd-Depotstoff im Gewichtsverhältnis von 1:100 bis 100:1 enthält.

3. Biozidzusammensetzung nach Anspruch 2, **dadurch gekennzeichnet, dass** sie das 2-Methylisothiazolin-3-on und den Formaldehyd oder den Formaldehyd-Depotstoff im Gewichtsverhältnis von 20:80 bis 80:20 enthält.

4. Biozidzusammensetzung nach einem der Ansprüche 1 bis 3, **dadurch gekennzeichnet, dass** sie das 2-Methylisothiazolin-3-on in einer Konzentration von 1 bis 50 Gew.%, bezogen auf die gesamte Biozidzusammensetzung, enthält.

5. Biozidzusammensetzung nach einem der Ansprüche 1 bis 4, **dadurch gekennzeichnet, dass** sie den Formaldehyd oder den Formaldehyd-Depotstoff in einer Konzentration von 1 bis 50 Gew.%, bezogen auf die gesamte Biozidzusammensetzung, enthält.

6. Biozidzusammensetzung nach einem der Ansprüche 1 bis 5, **dadurch gekennzeichnet, dass** sie das 2-Methylisothiazolin-3-on und den Formaldehyd oder den Formaldehyd-Depotstoff in einer Gesamtkonzentration von 1 bis 100 Gew.%, bezogen auf die gesamte Biozidzusammensetzung, enthält.

7. Biozidzusammensetzung nach Anspruch 6, **dadurch gekennzeichnet, dass** sie das 2-Methylisothiazolin-3-on und den Formaldehyd oder den Formaldehyd-Depotstoff in einer Gesamtkonzentration von 1 bis 30 Gew.%, bezogen auf die gesamte Biozidzusammensetzung, enthält.

8. Biozidzusammensetzung nach einem der Ansprüche 1 bis 7, **dadurch gekennzeichnet, dass** sie ein polares und/ oder ein unpolares flüssiges Medium enthält.

9. Biozidzusammensetzung nach Anspruch 8, **dadurch gekennzeichnet, dass** sie als ein polares flüssiges Medium Wasser, einen Alkohol, ein Glykol, einen Glykolether, einen Glykolester, ein Polyethylenglykol, ein Polypropylenglykol, N,N-Dimethylformamid, 2,2,4-Trimethylpentandiolmonoisobutyrat oder ein Gemisch aus mindestens zwei dieser Stoffe enthält.

10. Biozidzusammensetzung nach Anspruch 9, **dadurch gekennzeichnet, dass** das polare flüssige Medium Wasser ist.

11. Biozidzusammensetzung nach einem der Ansprüche 1 bis 10, **dadurch gekennzeichnet, daß** sie 2-Methylisothiazolin-3-on als einziges Isothiazolin-3-on enthält.

12. Biozidzusammensetzung nach einem der Ansprüche 1 bis 11, **dadurch gekennzeichnet, daß** sie als biozide Wirkstoffe nur 2-Methylisothiazolin-3-on und Formaldehyd und/oder einen Formaldehyd-Depotstoff enthält.

13. Verwendung einer Biozidzusammensetzung nach einem der Ansprüche 1 bis 12 zur Bekämpfung von schädlichen Mikroorganismen.

14. Gegen schädliche Mikroorganismen konserviertes Stoffgemisch oder Material, **gekennzeichnet durch** einen Gehalt an einer Biozidzusammensetzung nach einem der Ansprüche 1 bis 12.

**Claims**

1. Biocidal composition as additive to materials which may be attacked by harmful microorganisms, with a content of 2-methylisothiazolin-3-one as biocidal active agent and at least one further biocidal active agent, **characterised in that** the biocidal composition contains as the further biocidal active agent formaldehyde or a formaldehyde-releasing material and is substantially free of 5-chloro-2-methyl-4-isothiazolin-3-one, wherein the weight ratio of 2-methyl-isothiazolin-3-one to 5-chloro-2-methyl-4-isothiazolin-3-one amounts to at least 100:1.

2. Biocidal composition according to Claim 1, **characterised in that** it contains the 2-methylisothiazolin-3-one and the formaldehyde or formaldehyde-releasing material in the weight ratio from 1:100 to 100:1.

3. Biocidal composition according to Claim 2, **characterised in that** it contains the 2-methylisothiazolin-3-one and the formaldehyde or the formaldehyde-releasing material in the weight ratio from 20:80 to 80:20.

4. Biocidal composition according to one of Claims 1 to 3, **characterised in that** it contains the 2-methylisothiazolin-3-one at a concentration of from 1 to 50 Wt % taken on the total biocidal composition.

5. Biocidal composition according to one of Claims 1 to 4, **characterised in that** it contains the formaldehyde or the formaldehyde-releasing material at a concentration of 1 to 50 Wt % taken on the total biocidal composition.

6. Biocidal composition according to one of Claims 1 to 5, **characterised in that** it contains the 2-methylisothiazolin-3-one and the formaldehyde or the formaldehyde-releasing material at a total concentration from 1 to 100 Wt % taken on the total biocidal composition.

7. Biocidal composition according to Claim 6, **characterised in that** it contains the 2-methylisothiazolin-3-one and the formaldehyde or the formaldehyde-releasing material in a total concentration from 1 to 30 Wt % taken on the total biocidal composition.

8. Biocidal composition according to one of Claims 1 to 7, **characterised in that** it contains a polar and/or a non-polar liquid medium.

9. Biocidal composition according to Claim 8, **characterised in that** it contains as a polar liquid medium water, an alcohol, a glycol, a glycol ether, a glycol ester, a polyethylene glycol, a polypropylene glycol, N,N-dimethylformamide, 2,2,4-trimethylpentanediolmonoisobutyrate or a mixture of at least two of these materials.

10. Biocidal composition according to Claim 9, **characterised in that** the polar liquid medium is water.

11. Biocidal composition according to one of Claims 1 to 10, **characterised in that** it contains 2-methylisothiazolin-3-one as the only isothiazolin-3-one.

12. Biocidal composition according to one of Claims 1 to 11, **characterised in that** it contains as biocidal active materials only 2-methylisothiazolin-3-one and formaldehyde and/or a formaldehyde-releasing material.

13. The use of a biocidal composition according to one of Claims 1 to 12 for combatting harmful microorganisms.

14. Composition or material preserved against damaging microorganisms **characterised by** a content of a biocidal composition according to one of Claims 1 to 12.

**Revendications**

1. Composition biocide utilisée comme additif dans des substances qui peuvent être infestées par des micro-organismes nocifs, avec une teneur en 2-méthylisothiazoline-3-one comme substance biocide et au moins une autre substance biocide, **caractérisée en ce que** la composition biocide contient comme autre substance biocide, du formaldéhyde ou une autre substance à libération prolongée de formaldéhyde et qui est largement dépourvue de 5-chloro-2-méthyl-4-isothiazoline-3-one, le rapport en poids de la 2-méthylisothiazoline-3-one à la 5-chloro-2-méthyl-4-isothiazoline-3-one étant au moins de 100:1.

2. Composition biocide selon la revendication 1, **caractérisée en ce qu'**elle contient la 2-méthylisothiazoline-3-one et le formaldéhyde ou la substance à libération prolongée de formaldéhyde en un rapport en poids de 1:100 à 100:1.

**3.** Composition biocide selon la revendication 2, **caractérisée en ce qu'**elle contient la 2-méthylisothiazoline-3-one et le formaldéhyde ou la substance à libération prolongée de formaldéhyde en un rapport en poids de 20:80 à 80:20.

**4.** Composition biocide selon l'une quelconque des revendications 1 à 3, **caractérisée en ce qu'**elle contient la 2-méthylisothiazoline-3-one en une concentration de 1 à 50 % en poids par rapport à la composition biocide totale.

**5.** Composition biocide selon l'une quelconque des revendications 1 à 4, **caractérisée en ce qu'**elle contient le formaldéhyde ou la substance à libération prolongée de formaldéhyde en un rapport de 1 à 50 % en poids, par rapport à la composition biocide totale.

**6.** Composition biocide selon l'une quelconque des revendications 1 à 5, **caractérisée en ce qu'**elle contient la 2-méthylisothiazoline-3-one et le formaldéhyde ou la substance à libération prolongée de formaldéhyde en une concentration totale de 1 à 100 % en poids par rapport à la composition biocide totale.

**7.** Composition biocide selon la revendication 6, **caractérisée en ce qu'**elle contient la 2-méthylisothiazoline-3-one et le formaldéhyde ou la substance à libération prolongée de formaldéhyde en une concentration totale de 1 à 30 % en poids par rapport à la composition biocide totale.

**8.** Composition biocide selon l'une quelconque des revendications 1 à 7, **caractérisée en ce qu'**elle contient un milieu polaire et/ou un milieu liquide non polaire.

**9.** Composition biocide selon la revendication 8, **caractérisée en ce qu'**elle contient comme milieu liquide polaire, de l'eau, un alcool, un glycol, un éther de glycol, un ester de glycol, un polyéthylène glycol, un polypropylène glycol, du N,N-diméthylformamide, du 2,2,4-triméthylpentane-diol-mono-isobutyrate ou un mélange d'au moins deux de ces substances.

**10.** Composition biocide selon la revendication 9, **caractérisée en ce que** le milieu liquide polaire est de l'eau.

**11.** Composition selon l'une quelconque des revendications 1 à 10, **caractérisée en ce qu'**elle contient de la 2-méthylisothiazoline-3-one comme isothiazoline-3-one unique.

**12.** Composition biocide selon l'une quelconque des revendications 1 à 11, **caractérisée en ce qu'**elle contient comme principe actif biocide, uniquement la 2-méthylisothiazoline-3-one et du formaldéhyde et/ou une substance à libération prolongée de formaldéhyde.

**13.** Utilisation d'une composition biocide selon l'une quelconque des revendications 1 à 12, pour lutter contre les micro-organismes nocifs.

**14.** Mélange de substances ou matériau conservé contre des micro-organismes nocifs, **caractérisé par** une teneur en composition biocide selon l'une quelconque des revendications 1 à 12.